Europäisches Patentamt

European Patent Office

Office européen des brevets

(11) Veröffentlichungsnummer: **0 553 138 B1**

(12) # EUROPÄISCHE PATENTSCHRIFT

(45) Veröffentlichungstag der Patentschrift: **22.02.95**

(51) Int. Cl.6: **D21C 5/02**

(21) Anmeldenummer: **91917586.9**

(22) Anmeldetag: **30.09.91**

(86) Internationale Anmeldenummer:
**PCT/EP91/01869**

(87) Internationale Veröffentlichungsnummer:
**WO 92/06240 (16.04.92 92/09)**

(54) **VERWENDUNG VON POLYETHERKETTENHALTIGEN VERBINDUNGEN, HERGESTELLT AUS EPOXIDIERTEN CARBONSÄUREDERIVATEN, ZUR ENTFERNUNG VON DRUCKFARBEN AUS ALTPAPIEREN UND/ODER PAPIERKREISLAUFWÄSSERN.**

(30) Priorität: **09.10.90 DE 4032050**

(43) Veröffentlichungstag der Anmeldung:
**04.08.93 Patentblatt 93/31**

(45) Bekanntmachung des Hinweises auf die Patenterteilung:
**22.02.95 Patentblatt 95/08**

(84) Benannte Vertragsstaaten:
**AT CH DE ES FR GB IT LI NL SE**

(56) Entgegenhaltungen:
**WO-A-91/11424**
**DE-A- 3 401 444**
**DE-A- 3 923 393**
**GB-A- 1 347 971**

**American oil chemists' society Chic Journal, Vol. 45, May 1968 Keith L. Johnson: "New Nonionic detergents derived from Epoxidized Oils. IV.1", see page 374 - page 376, figure 1 in particular page 374, column 1**

"Introduction"

(73) Patentinhaber: **Henkel Kommanditgesellschaft auf Aktien**

**D-40191 Düsseldorf (DE)**

(72) Erfinder: **DAUTE, Peter**
**Kreuzeskirchstrasse 5**
**D-4300 Essen (DE)**
Erfinder: **SCHRECK, Berthold**
**Mauerstrasse 26**
**D-4000 Düsseldorf 30 (DE)**
Erfinder: **HORNFECK, Klaus**
**August-Burbeck-Strasse 34**
**D-4020 Mettmann (DE)**

**Beschreibung**

Die Erfindung betrifft die Verwendung von polyetherkettenhaltigen Verbindungen, hergestellt durch Umsetzung von epoxidierten $C_{10-22}$-Carbonsäurederivaten mit Polyalkylenglycolen mit mittleren Molekulargewichten zwischen 100 und 2000 und/oder bestimmten alkoxylierten aliphatischen Verbindungen, zur Entfernung von Druckfarben aus bedruckten Altpapieren und/oder Papierkreislaufwässern.

Zur Herstellung von beispielsweise Zeitungsdruck und Hygienepapieren werden heute in großen Mengen Altpapiere eingesetzt. Für diese Papiersorten sind Helligkeit und Farbe Qualitätsmerkmale. Um diese zu erreichen, müssen die Druckfarben aus den bedruckten Altpapieren entfernt werden. Üblicherweise geschieht dies mittels Deinkingverfahren, die im wesentlichen aus 2 Teilschritten bestehen:

1. Aufschlagen der Altpapiere, d. h. Zerfasern in Wasser bei gleichzeitigem Einwirken der für die Ablösung der Druckfarbenteilchen benötigten Chemikalien und

2. Ausscheidung der abgelösten Druckfarbenteilchen aus der Faserstoffsuspension.

Der zweite Verfahrensschritt kann durch Auswaschen oder Flotation erfolgen (Ullmanns Encyclopädie der technischen Chemie, 4. Auflage, Band 17, Seiten 570 - 571 (1979)). Bei der Flotation, bei der die unterschiedliche Benetzbarkeit von Druckfarben und Papierfasern ausgenutzt wird, wird Luft durch die Faserstoffsuspension gedrückt oder gesaugt. Dabei verbinden sich kleine Luftbläschen mit den Druckfarbenteilchen und bilden an der Wasseroberfläche einen Schaum, der mit Stoffängern entfernt wird.

Üblicherweise wird das Deinken von Altpapieren bei alkalischen pH-Werten in Gegenwart von Alkalihydroxiden, Alkalisilikaten, oxidativ wirkenden Bleichmitteln und oberflächenaktiven Substanzen bei Temperaturen zwischen 30 und 50 °C durchgeführt. Als oberflächenaktive Substanzen werden überwiegend Tenside anionischer und/oder nichtionischer Natur eingesetzt, beispielsweise Seifen, ethoxylierte Fettalkohole und/oder ethoxylierte Alkylphenole (Wochenblatt für Papierfabrikation, 17, 646 - 649 (1985)).

Die DE-A-34 01 444 betrifft ein Verfahren zum Deinken von Altpapier unter Verwendung einer Verbindung der allgemeinen Formel

$$RCOO-(CH_2CH_2O)_m-(AO)_n-R'$$

in der R eine Alkyl- oder Alkenylgruppe mit 7 bis 21 C-Atomen, $R^1$ ein Wasserstoffatom oder eine Alkyl-, Alkenyl- oder Acylgruppe mit 1 bis 18 C-Atomen, AO $C_3H_6O$- oder $C_4H_8O$-Gruppen oder eine Mischung aus $C_2H_4O$-, $C_3H_6O$- und $C_4H_8O$-Gruppen, m eine ganze Zahl von 1 bis 100 und n eine ganze Zahl von 1 bis 100 bedeuten.

Die Verwendung von ethoxylierten Rizinusölen zum Deinken von bedruckten Altpapieren ist beispielsweise aus JP-A-78 52705, referiert in Chem. Abstr. 89, 131445j (1978) und DE-A-21 48 590 bekannt. In dem japanischen Schutzrecht werden Mischungen aus Rizinusöl mit 10 bis 400 % Ethylenoxid und ethoxyliertem Nonylphenol beschrieben, die sich zur Entfernung von Druckfarben aus bedruckten Altpapieren eignen. Das in der deutschen Patentschrift DE-C-21 48 590 geschützte Verfahren betrifft organische Materialien, beispielsweise Papier, die mit Natriumchlorit in Gegenwart von organischen Verbindungen mit wenigstens einer Ethylenoxid- und/oder Propylenoxideinheit gebleicht werden. Als organische Verbindung mit wenigstens einer Alkylenoxideinheit eignet sich u. a. ethoxyliertes Rizinusöl.

Bei Verwendung ethoxylierter Rizinusöle zum Entfernen von Druckfarben aus Altpapieren muß jedoch in Kauf genommen werden, daß die auf dem Markt erhältlichen Mengen an Rizinusöl und damit auch an ethoxylierten Rizinusölen starken Schwankungen unterworfen sind. Mißernten in den Hauptanbaugebieten Brasilien und Indien führen in mehr oder weniger großen Abständen zu einer Verknappung des Ausgangsmaterials Rizinusöl. Es besteht daher ein Bedürfnis nach einem Ersatz für ethoxylierte Rizinusöle, die, zur Entfernung von Druckfarben aus Altpapieren eingesetzt, zumindest zu ebenso guten Deinkingergebnissen führen wie das zu ersetzende Produkt. Vor allem sollte das Austauschprodukt von einer breiteren, weniger krisenanfälligen Rohstoffbasis aus leicht zugänglich sowie ökologisch und toxikologisch unbedenklich sein.

Es wurde nun gefunden, daß sich polyetherkettenhaltige Verbindungen, hergestellt aus epoxidierten $C_{10-22}$-Carbonsäurederivaten, als Ersatz für ethoxylierte Rizinusöle zum Altpapierdeinken in hervorragender Weise eignen. Ferner wurde gefunden, daß mit polyetherkettenhaltigen Verbindungen, hergestellt aus epoxidierten $C_{10-22}$-Carbonsäurederivaten, auch Druckfarben aus Papierkreislaufwässern mit guten Ergebnissen entfernt werden können.

Gegenstand der Erfindung ist dementsprechend die Verwendung von polyetherkettenhaltigen Verbindungen, hergestellt durch Umsetzung von epoxidierten $C_{10-22}$-Carbonsäurederivaten mit Polyalkylenglycolen mit mittleren Molekulargewichten zwischen 100 und 2000, alkoxylierten aliphatischen $C_{1-22}$-Alkoholen, alkoxylierten aliphatischen Aminen, alkoxylierten aliphatischen $C_{1-22}$-Carbonsäuren und/oder alkoxylierten aliphatischen $C_{1-22}$-Carbonsäureamiden, zur Entfernung von Druckfarben aus bedruckten Altpapieren und/oder Papierkreislaufwässern.

Epoxidierte Carbonsäurederivate werden in bekannter Weise in Gegenwart von Katalysatoren, beispielsweise Schwefelsäure oder Bortrifluorid, bei Temperaturen zwischen 20 und 190 °C mit vorzugsweise Polyethylenglycolen mit mittleren Molekulargewichten zwischen 100 und 2000, mit 5 bis 30 Mol Ethylenoxid alkoxylierten aliphatischen $C_{1-22}$-Alkoholen, beispielsweise ethoxyliertem Methanol und/oder ethoxylierten Fettalkoholen, mit 5 bis 30 Mol Ethylenoxid alkoxylierten aliphatischen Aminen, beispielsweise ethoxyliertem Propylamin, Dodecylamin, Stearylamin, Oleylamin und/oder Kokosfettamin, mit 5 bis 30 Mol Ethylenoxid alkoxylierten aliphatischen $C_{1-22}$-Carbonsäuren und/oder deren Amiden, beispielsweise ethoxylierter Propionsäure, Stearinsäure, Ölsäure und/oder Kokosfettsäure, umgesetzt (J. Am. Oil Chem. Soc. 45, 374 (1968)). Besonders bevorzugt werden die Umsetzungen mit Polyethylenglycolen mit mittleren Molekulargewichten zwischen 500 und 1000, mit 5 bis 30 Mol Ethylenoxid alkoxylierten aliphatischen $C_{1-22}$-Alkoholen und/oder mit 5 bis 30 Mol Ethylenoxid alkoxylierten aliphatischen Aminen durchgeführt.

Die als Edukte für die Herstellung der erfindungsgemäßen polyetherkettenhaltigen Verbindungen zum Einsatz gelangenden epoxidierten $C_{10-22}$-Carbonsäurederivate sind durch Epoxidierung von ungesättigten $C_{10-22}$-Carbonsäurederivaten zugänglich. Gemäß dem in DE-PS 857 364 beschriebenen Verfahren können ungesättigte Carbonsäurederivate durch Umsetzung mit Peressigsäure in Anwesenheit saurer Katalysatoren oder mit in situ aus Ameisensäure und Wasserstoffperoxid gebildeter Perameisensäure epoxidiert werden. Die Jodzahlen der erhaltenen Epoxidierungsprodukte liegen unterhalb 20, vorzugsweise unterhalb 15. Als ungesättigte Carbonsäurederivate eignen sich alle OH-gruppenfreien, natürlich vorkommenden und/oder synthetisch herstellbaren Carbonsäurederivate, die Carbonsäurereste mit wenigstens 1 oder 2 Doppelbindungen in 9- und/oder 13-Stellung besitzen, beispielsweise 9c-Dodecensäure-, 9c-Tetradecensäure-, 9c-Hexadecensäure-, 9c-Octadecensäure-, 9t-Octadecensäure-, 9c,12c-Octadecadiensäure-, 9c,12c,15c-Octadecatriensäure-, 9c-Eicosensäure- und/oder 13c-Docosensäurederivate und/oder Mischungen mit wenigstens einem hohen Gehalt solcher ungesättigten Carbonsäurederivate. Ungesättigte Carbonsäurederivate, die $C_{19-22}$-Carbonsäurereste mit wenigstens 1 oder 2 Doppelbindungen in 9- und/oder 13-Stellung enthalten, werden bevorzugt. Geeignete ungesättigte Carbonsäurederivate sind beispielsweise ungesättigte Carbonsäureester, ungesättigte Carbonsäureamide, ungesättigte Carbonsäuremono- und/oder -di-$C_{1-4}$-alkylamide und/oder ungesättigte Carbonsäuremono- und/oder -di-$C_{1-4}$-alkanolamide. Ungesättigte Carbonsäurealkylester mit 1 bis 18 C-Atomen im einwertigen Alkoholrest und/oder Mono-, Di-und/oder Triglyceride, die Carbonsäurereste mit wenigstens 1 oder 2 Doppelbindungen in 9- und/oder 13-Stellung enthalten, werden bevorzugt.

Beispiele für ungesättigte $C_{10-22}$-Carbonsäure-$C_{1-18}$-alkylester, die in an sich bekannter Weise durch Veresterung der entsprechenden OH-gruppenfreien, ungesättigten Carbonsäuren oder durch Umesterung der entsprechenden Mono-, Di- und/oder Triglyceride mit $C_{1-18}$-Alkylalkoholen, beispielsweise Methanol, Ethanol, Propanol, Butanol, Isobutanol, 2-Ethylhexanol, Decanol und/oder Stearylalkohol, zugänglich sind, sind Palmitoleinsäuremethylester, Ölsäuremethylester, Ölsäureethylester, Ölsäureisobutylester, Ölsäure-2-ethylhexylester und/oder Ölsäuredecylester und/oder $C_{10-22}$-Carbonsäure-$C_{1-18}$-alkylestergemische mit wenigstens einem hohen Gehalt an solchen $C_{10-22}$-Carbonsäure-$C_{1-18}$-alkylestern, die in den Carbonsäureresten wenigstens eine oder zwei Doppelbindungen in 9- und/oder 13-Stellung haben, wie Palmfettsäuremethylester, Sojafettsäuremethylester, Sojafettsäure-2-ethylhexylester, Rübfettsäuremethylester und/oder Talgfettsäureethylester. Als Mono-, Di- und/oder Triglyceride, die OH-gruppenfreie, ungesättigte $C_{10-22}$-Carbonsäurereste mit wenigstens einer oder zwei Doppelbindungen in 9-und/oder 13-Stellung enthalten, eignen sich insbesondere Fette und/oder Öle natürlichen Ursprungs, deren Carbonsäuregehalt sich überwiegend aus ungesättigten $C_{10-22}$-Carbonsäuren mit wenigstens einer oder zwei Doppelbindungen in 9- und/oder 13-Stellung, vorzugsweise überwiegend aus ungesättigten $C_{16-22}$-Carbonsäuren mit wenigstens einer oder zwei Doppelbindungen in 9- und/oder 13-Stellung zusammensetzt, wie Olivenöl, Leinöl, Sonnenblumenöl, Safloröl, Sojaöl, Erdnußöl, Baumwollsaatöl, erucasäurereiches und/oder erucasäurearmes Rübol, Palmöl, Schmalz und/oder Talg.

Die erfindungsgemäß zu verwendenden polyetherkettenhaltigen Verbindungen werden Papierstoffsuspensionen vorzugsweise in Mengen von 0,02 bis 2 Gew.-%, besonders bevorzugt von 0,1 bis 0,8 Gew.-%, jeweils bezogen auf lufttrockenen Papierstoff, zugesetzt. Lufttrokkener Papierstoff bedeutet, daß sich im Papierstoff ein Gleichgewichtszustand an innerer Feuchte eingestellt hat. Dieser Gleichgewichtszustand hängt von der Temperatur und von der relativen Feuchte der Luft ab.

In vielen Fällen kann das Deinking-Ergebnis, d. h. die Entfernung von Druckfarben aus bedruckten Altpapieren gesteigert werden, wenn die erfindungsgemäßen polyetherkettenhaltigen Verbindungen in Kombination mit beispielsweise $C_{10-22}$-Fettsäuren, ethoxylierten $C_{6-22}$-Alkylalkoholen, ethoxylierten Alkylphenolen, Polymeren, wie Polyacrylamiden und/oder Polydimethylaminoethylmethacrylat, und/oder Copolymeren, beschrieben beispielsweise in DE-A-38 39 479, eingesetzt werden. Die Gesamtmenge dieser

3

fakultativen Bestandteile liegt zwischen 0,1 und 1 Gew.-%, bezogen auf lufttrockenen Papierstoff.

In Gegenwart polyetherkettenhaltiger Verbindungen lassen sich wasserverdünnbare und/oder lösungsmittelhaltige Druckfarben, beispielsweise Zeitungsrotationsfarben, Buchdruckfarben, Offsetdruckfarben, Illustrationstiefdruckfarben, Flexodruckfarben, Laserdruckfarben und/oder Verpackungstiefdruckfarben aus bedruckten Altpapieren, beispielsweise Zeitungen, Illustrierten, Computerpapieren, Zeitschriften, Broschüren, Formularen, Telefonbüchern und/oder Katalogen entfernen. Die in Gegenwart der erfindungsgemäß zu verwendenden Verbindungen deinkten Altpapiere zeichnen sich durch sehr hohe Weißgrade aus.

Druckfarben lassen sich aus Altpapieren beispielsweise nach folgendem Verfahren entfernen: In einem Stofflöser werden bedruckte Altpapiere bei einer Stoffdichte beispielsweise zwischen 1 und 5 Gew.-% in wäßriger Lösung, die typischerweise 0 bis 1,5 Gew.-% Wasserstoffperoxid (100 %ig), 0 bis 2,5 Gew.-% Natriumhydroxid (99 gew.-%ig), 0 bis 4,0 Gew.-% Natronwasserglas mit einem Feststoffgehalt von 35 Gew.-%, 0,02 bis 2 Gew.-% erfindungsgemäße polyetherkettenhaltige Verbindungen und 0 bis 1 Gew.-% der oben genannten fakultativen Bestandteile - alle Gew.-%-Angaben beziehen sich auf lufttrockenes Altpapier - enthält, bei Temperaturen zwischen 20 und 60 °C zerkleinert. Nach einer Verweilzeit zwischen typischerweise zwischen 60 und 120 Minuten bei Temperaturen zwischen 20 und 60 °C werden die Papierstoffsuspensionen in Wasser eingerührt oder mit Wasser versetzt, so daß 0,6 bis 1,6 gew.-%ige Papierstoffsuspensionen erhalten werden. Anschließend werden die abgelösten Druckfarbenteilchen in an sich bekannter Weise durch Auswaschen oder durch Flotation aus den Papierstoffsuspensionen ausgeschieden. Vorzugsweise wird in an sich bekannter Weise, beispielsweise in einer Denver-Flotationszelle flotiert.

Bei Einsatz polyetherkettenhaltiger Verbindungen werden Druckfarben sowohl aus dem Altpapier als auch aus dem Kreislaufwasser entfernt. Die erfindungsgemäß zu verwendenden Verbindungen können auch zur separaten Reinigung von Papierkreislaufwässern eingesetzt werden. In diesen Fällen werden nach Zusatz von 2 bis 100 mg polyetherkettenhaltiger Verbindungen pro Liter Kreislaufwasser die Druckfarbenteilchen beispielsweise durch Filtration oder Flotation ausgeschieden.

Beispiele

Herstellung polyetherkettenhaltiger Verbindungen

Beispiel 1: Umsetzung von Sojaölepoxid mit Polyethylenglycolmethylether

256 g Sojaölepoxid (ungefähre Fettsäurezusammensetzung: 8 % Palmitinsäure, 4 % Stearinsäure, 28 % Ölsäure, 53 % Linolsäure, 6 % Linolensäure; Epoxidgehalt = 6,73 Gew.-%; Jodzahl = 5; Säurezahl = 0,4), 1009 g Polyethylenglycolmethylether mit einem mittleren Molekulargewicht von 1000 (OH-Zahl (OHZ) = 60) und 4,1 g konzentrierte Schwefelsäure wurden unter Rühren auf 110 bis 115 °C erhitzt. Nach 6 Stunden war die Reaktion beendet und es wurde mit 4,5 g Diethylethanolamin neutralisiert. Das erhaltene flüssige, dunkelgelbe, trübe Produkt hatte eine OHZ von 65.

Beispiel 2: Umsetzung von Sojaölepoxid mit Polyethylenglycol mit einem mittleren Molekulargewicht von 2000

238 g Sojaölepoxid (Kenndaten wie in Beispiel 1 angegeben), 2000 g Polyethylenglycol mit einem mittleren Molekulargewicht von 2000 (OHZ = 56) und 2,5 g konzentrierte Schwefelsäure wurden unter Rühren auf 110 bis 120 °C erhitzt. Nach 2,5 Stunden war die Reaktion beendet. Nach der Neutralisation mit 2,5 g Diethylethanolamin wurde ein gelbes Wachs mit einer OHZ von 64 erhalten.

Beispiel 3: Umsetzung von Sojaölepoxid mit Talgalkohol • 4 Mol Ethylenoxid

233 g Sojaölepoxid (Fettsäurezusammensetzung wie in Beispiel 1 angegeben; Epoxidgehalt = 6,88 Gew.-%; Jodzahl = 5; Säurezahl = 0,4), 818 g Talgalkohol • 14 Mol Ethylenoxid (OHZ = 69) und 5,0 g konzentrierte Schwefelsäure wurden unter Rühren auf 100 bis 110 °C erhitzt. Nach 5,5 Stunden war die Reaktion beendet. Nach der Neutralisation mit 5 g Diethylethanolamin wurde ein gelbes Wachs mit einer OHZ von 69 erhalten.

Beispiel 4: Umsetzung von Sojaölepoxid mit Polyethylenglycol mit einem mittleren Molekulargewicht von 600

233 g Sojaölepoxid (Kenndaten wie in Beispiel 3 angegeben), 780 g Polyethylenglycol mit einem mittleren Molekulargewicht von 600 (OHZ = 187) und 3,9 g Schwefelsäure wurden unter Rühren auf 100 bis 110 °C erhitzt. Nach 4 Stunden war die Reaktion beendet und es wurde mit 4,1 g Diethylethanolamin neutralisiert. Die erhaltene gelbe Flüssigkeit hatte eine OHZ von 148.

Beispiel 5: Umsetzung von Sojaölepoxid mit Stearylamin • 25 Mol Ethylenoxid

190 g Sojaölepoxid (Kenndaten wie in Beispiel 3 angegeben), 992 g Stearylamin • 25 Mol Ethylenoxid (OHZ = 92,3) und 0,4 g 30 gew.-%ige methanolische Kaliumhydroxidlösung wurden unter Rühren auf 160 bis 180 °C erhitzt. Nach 14 Stunden war die Reaktion beendet (Epoxidgehalt: < 0,16 Gew.-%), und es wurde mit 10 ml Natriumhypochloritlösung gebleicht. Die erhaltene dunkelbraune Flüssigkeit hatte eine OHZ von 98,6 und eine Aminzahl von 36,5.

Beispiel 6: Umsetzung von Sojaölepoxid mit Stearinsäure • 20 Mol Ethylenoxid

120 g Sojaölepoxid (Kenndaten wie in Beispiel 3 angegeben), 533 g Stearinsäure • 20 Mol Ethylenoxid (OHZ = 52,7, Säurezahl = 0,2) und 1 g konzentrierte Schwefelsäure wurden unter Rühren auf 110 bis 120 °C erhitzt. Nach 5 Stunden war die Reaktion beendet und es wurde mit 2,8 g Diethylethanolamin neutralisiert. Der erhaltene gelbe Feststoff hatte eine Verseifungszahl von 73 und eine Säurezahl von 2,1.

Anwendungsbeispiele

Druckfarbenentfernung aus alkalischem Medium

17,5 g lufttrockenes (= 16,5 g atro bei 5,7 % Feuchte; atro = absolut trocken) bedrucktes Altpapier, bestehend aus 50 Gew.-% Tageszeitungen und 50 Gew.-% Illustrierten, wurden bei 3,5 Gew.-% Stoffdichte in einem Multimixer, Stufe 2 mit einer wäßrigen Lösung, enthaltend 2,0 Gew.-% Natronwasserglas, Feststoffgehalt: 35 Gew.-% (37 bis 40 °Bé), 0,7 Gew.-% Wasserstoffperoxid (100 %ig), 1,0 Gew.-% Natriumhydroxid (99 gew.-%ig) und 0,2 Gew.-% polyetherkettenhaltige Verbindung (alle Gew.-%-Angaben bezogen auf lufttrocknen Papierstoff) bei 45 °C 10 Minuten zerkleinert. Nach 105 minütigem Stehenlassen bei 45 °C wurde der Papierbrei mit Wasser auf 1 Gew.-% Stoffdichte verdünnt. Anschließend wurde 12 Minuten bei 45 °C in einer Denver-Laborflotationszelle bei 100 Umdrehungen pro Minute flotiert. Nach der Flotation wurde der erhaltene Papierbrei auf einer Filternutsche vom Wasser getrennt und zwischen 2 Filterpapieren auf einer Fototrockenpresse zu einem Blatt geformt und bei 100 °C 90 Minuten getrocknet.

Die Deinking-Ergebnisse sind in Tabelle 1 zusammengefaßt. Die Deinkbarkeitsmaßzahl (DEM) wurde aus den Reflektionsfaktoren $R_{457nm}$ (Weißgrad) der bedruckten (BS) deinkten (DS) und unbedruckten (US) Papierstoffe nach folgender Formel berechnet:

$$\text{DEM (\%)} = \frac{\text{Weißgrad (DS)} - \text{Weißgrad (BS)}}{\text{Weißgrad (US)} - \text{Weißgrad (BS)}} \times 100$$

(0 % bedeutet keine Druckfarbenentfernung, 100 % bedeutet quantitative Druckfarbenentfernung).

Das Kreislaufwasser war in allen Fällen klar.

Tabelle 1

| eingesetzte polyetherkettenhaltige Verbindung,hergestellt nach Beispiel | $R_{457}$[1] (US) | $R_{457}$[1] (BS) | $R_{457}$[1] (DS) | DEM (%) |
|---|---|---|---|---|
| 1 | 64,4 | 43,0 | 52,1 | 43 |
| 2 | 64,4 | 43,0 | 51,5 | 40 |
| 3 | 64,4 | 43,0 | 57,4 | 67 |
| 4 | 64,4 | 43,0 | 55,5 | 58 |
| 5 | 64,4 | 43,0 | 58,2 | 71 |
| 6 | 64,4 | 43,0 | 57,5 | 68 |

[1] $R_{457}$ bedeutet $R_{457nm}$

## Patentansprüche

1. Verwendung von polyetherkettenhaltigen Verbindungen, hergestellt durch Umsetzung von epoxidierten $C_{10-22}$-Carbonsäurederivaten mit Polyalkylenglycolen mit mittleren Molekulargewichten zwischen 100 und 2000, alkoxylierten aliphatischen $C_{1-22}$-Alkoholen, alkoxylierten aliphatischen Aminen, alkoxylierten aliphatischen $C_{1-22}$-Carbonsäuren und/oder alkoxylierten aliphatischen $C_{1-22}$-Carbonsäureamiden, zur Entfernung von Druckfarben aus bedruckten Altpapieren und/oder Papierkreislaufwässern.

2. Verwendung nach Anspruch 1, dadurch gekennzeichnet, daß polyetherkettenhaltige Verbindungen, hergestellt durch Umsetzung von epoxidierten Carbonsäurederivaten mit Polyethylenglycolen mit mittleren Molekulargewichten zwischen 100 und 2000, mit 5 bis 30 Mol Ethylenoxid alkoxylierten aliphatischen $C_{1-22}$-Alkoholen, mit 5 bis 30 Mol Ethylenoxid alkoxylierten aliphatischen Aminen, mit 5 bis 30 Mol Ethylenoxid alkoxylierten aliphatischen $C_{1-22}$-Carbonsäuren und/oder mit 5 bis 30 Mol Ethylenoxid alkoxylierten aliphatischen $C_{1-22}$-Carbonsäureamiden, vorzugsweise mit Polyethylenglycolen mit mittleren Molekulargewichten zwischen 500 und 1000, mit 5 bis 30 Mol Ethylenoxid alkoxylierten aliphatischen $C_{1-22}$-Alkoholen und/oder mit 5 bis 30 Mol Ethylenoxid alkoxylierten aliphatischen Aminen, verwendet werden.

3. Verwendung nach einem oder beiden der Ansprüche 1 bis 2, dadurch gekennzeichnet, daß polyetherkettenhaltige Verbindungen, hergestellt aus epoxidierten $C_{16-22}$-Carbonsäurederivaten, verwendet werden.

4. Verwendung nach einem oder mehreren der Ansprüche 1 bis 3, dadurch gekennzeichnet, daß polyetherkettenhaltige Verbindungen, hergestellt aus epoxidierten Carbonsäure-$C_{1-18}$-alkylestern und/oder epoxidierten 1Carbonsäuremono-, -di-und/oder -triglyceriden, verwendet werden.

## Claims

1. The use of compounds containing polyether chains prepared by reaction of epoxidized $C_{10-22}$ carboxylic acid derivatives with polyalkylene glycols having average molecular weights of 100 to 2,000, alkoxylated aliphatic $C_{1-22}$ alcohols, alkoxylated aliphatic amines, alkoxylated aliphatic $C_{1-22}$ carboxylic acids and/or alkoxylated aliphatic $C_{1-22}$ carboxylic acid amides for the removal of printing inks from printed wastepaper and/or circuit waters.

2. The use claimed in claim 1, characterized in that compounds containing polyether chains prepared by reaction of epoxidized carboxylic acid derivatives with polyethylene glycols having average molecular weights of 100 to 2,000, aliphatic $C_{1-22}$ alcohols alkoxylated with 5 to 30 mol ethylene oxide, aliphatic amines alkoxylated with 5 to 30 mol ethylene oxide, aliphatic $C_{1-22}$ carboxylic acids alkoxylated with 5 to 30 mol ethylene oxide and/or aliphatic $C_{1-22}$ carboxylic acid amides alkoxylated with 5 to 30 mol ethylene oxide, preferably with polyethylene glycols having average molecular weights of 500 to 1,000, aliphatic $C_{1-22}$ alcohols alkoxylated with 5 to 30 mol ethylene oxide and/or aliphatic amines alkoxylated with 5 to 30 mol ethylene oxide are used.

**3.** The use claimed in one or both of claims 1 to 2, characterized in that compounds containing polyether chains prepared from epoxidized $C_{16-22}$ carboxylic acid derivatives are used.

**4.** The use claimed in one or more of claims 1 to 3, characterized in that compounds containing polyether chains prepared from epoxidized carboxylic acid $C_{1-18}$ alkyl esters and/or epoxidized carboxylic acid mono-, di- and/or triglycerides are used.

**Revendications**

**1.** Utilisation de composés contenant des chaînes polyéthers obtenus par réaction de dérivés d'acide carboxylique en $C_{10}$ à $C_{22}$, époxydés avec des polyalcoylèneglycols ayant un poids moléculaire moyen compris entre 100 et 2000, avec des alcools en $C_1$ à $C_{22}$ aliphatiques alcoxylés, avec des amines aliphatiques alcoxylées, avec des acides carboxyliques en $C_1$ à $C_{22}$ aliphatiques alcoxylés et/ou avec des amides d'acides carboxylique en $C_1$ à $C_{22}$ aliphatiques alcoxylés, pour l'élimination des encres d'imprimerie des vieux papiers imprimés et/ou des eaux de recyclage du papier.

**2.** Utilisation selon la revendication 1, caractérisée en ce qu'on utilise des composés contenant des chaînes polyéthers obtenus par réaction des dérivés d'acide carboxylique époxydés avec des polyéthylèneglycols ayant un poids moléculaire moyen entre 100 et 2000, avec des alcools en $C_1$ à $C_{22}$ aliphatiques, alcoxylés par 5 à 30.mol d'oxyde d'éthylène, avec des amines aliphatiques alcoxylées par 5 à 30 mol d'oxyde d'éthylène, avec des acides carboxyliques en $C_1$ à $C_{22}$ aliphatiques alcoxylés par 5 à 30 mol d'oxyde d'éthylène, et/ou avec des amides d'acide carboxylique en $C_1$ à $C_{22}$, aliphatiques, alcoylés par 5 à 30 mol d'oxyde d'éthylène, de préférence avec des polyéthèlèneglycols ayant un poids moléculaire moyen compris entre 500 et 1000, avec des alcools en $C_1$ à $C_{22}$ aliphatiques alcoxylés par 5 à 30 mol d'oxyde d'éthylène et/ou avec des amines aliphatiques alcoxylées par 5 à 30 mol d'oxyde d'éthylène.

**3.** Utilisation selon l'une ou les deux revendications 1 à 2, caractérisée en ce que l'on utilise des composés contenant des chaînes polyéthers produits à partir de dérivés d'acide carboxylique en $C_{16}$ à $C_{22}$ époxydés.

**4.** Utilisation selon l'une ou plusieurs des revendications 1 à 3, caractérisée en ce que l'on utilise des composés contenant des chaînes polyéthers produits à partir d'esters d'alcoyle en $C_1$ à $C_{18}$ d'acide carboxylique époxydés et/ou à partir de mono-, de di- et/ou de triglycérides d'acide carboxylique époxydés.